# EUROPEAN PATENT SPECIFICATION

(11) **EP 3 280 785 B1**
(45) Date of publication and mention of the grant of the patent: **17.07.2019**
(21) Application number: 16733724.5
(22) Date of filing: 07.04.2016
(51) Int. Cl.: C10L 5/36, C10L 5/44

(54) **METHOD AND SYSTEM FOR CONVERSION OF WET BIOMASS TO HIGH-GRADE FUEL PELLETS**
VERFAHREN UND SYSTEM ZUR UMWANDLUNG VON NASSER BIOMASSE IN HOCHWERTIGE BRENNSTOFFPELLETS
PROCÉDÉ ET SYSTÈME POUR LA CONVERSION D'UNE BIOMASSE HUMIDE EN PASTILLES DE COMBUSTIBLE SUPÉRIEUR

(30) Priority: 10.04.2015 NL 1041265
(43) Date of publication of application: 14.02.2018
(73) Proprietor: Demmer, Johannes Jozef, 6200 Aabenraa (DK)
(72) Inventor: Demmer, Johannes Jozef, 6200 Aabenraa (DK)
(74) Representative: van Dokkum, Willem Gerard Theodoor
(86) International application number: PCT/NL2016/050237
(87) International publication number: WO 2016/163877

(56) References cited:
- EP-A1- 2 157 158
- EP-A1- 2 636 977
- DE-A1-102013 107 983

## Description

The invention relates to a method and system for conversion of wet woody biomass, in particular wood waste originating from landscape maintenance (groundskeeping etc.), into high-grade fuel pellets.

Wood pellets are a well-known product within the international market of (woody) biomass. The global production of wood pellets is growing almost exponentially: from 2 million tonnes in 2001 to 4 million tonnes in 2006, 9 million tonnes in 2008 and 15 million tonnes in 2010. Over the years, the market has become increasingly professional. Moreover, the average production capacity and capital investment per wood pellet production company increases continuously. Mostly, pellets are made from sawn wood waste etc., however, the production of pellets from biomass increases. The quality of the pellets is covered by EN+ certification from the European Pellet Council, based on the European standard EN 14961-2. This standard imposes high requirements on the quality of wood pellets, including the ash content during combustion. Independent certification bodies monitor the quality and durability of wood pellets.

EP-A-2 157 158 discloses a method for manufacturing pellets from sustainable coarse fibrous products. DE-A-10 2013 107 983 discloses an apparatus and a process for the production of biomass pellets.

The present invention aims to provide a method and a system (assembly) respectively for conversion of wet or moist woody biomass, in particular wood waste originating from landscape maintenance, etc., into high quality fuel pellets etc. for use as a high quality fuel. The pellets provided have a certification level of EN+ A1, A2, which until now could only be achieved by producing pellets from clean waste from the wood processing industry.

The method according to the invention comprises the following steps:
- providing a quantity or a flow of woody biomass;
- basic reduction of the ingredients of the woody biomass into coarse chips with a maximum size of 50 mm for example;
- if necessary, cleaning of the coarse chips, preferably with the aid of air support;
- wet milling the coarse chips into wet fine chips by means of e.g. a pellet shredder, a woodchipper, in particular a mill with an edge mill crushing/grinding mechanism;
- drying of the wet fine chips into dry fine chips, e.g. in a tumble dryer;
- splitting the dry fine chips into different fractions, by means of e.g. a shaking sieve (gyratory screen), into
   a first waste fraction I having a cross section (particle size) of the dry fine chip particles of 1 mm maximum,
   a second waste fraction II having a cross section (particle size) of the dry fine chip particles of 2 - 4 mm,
   a third waste fraction III having a cross section (particle size) of the dry fine chip particles of 1 - 2 mm and
   a forth waste fraction IV having a cross section (particle size) of the dry fine chip particles of greater than 4 mm;
- removal of the first fraction I (<1 mm), for example by combustion in an incinerator for the purpose of the above-mentioned drying of the wet fine chips, storage of the second fraction II (with particle size 2 - 4 mm),
   feeding of the third fraction III (with particle size 1 - 2 mm) to a (further) sorting device and
   feeding of the forth fraction IV (with particle size > 4 mm) to a reduction device, for example a hammer mill;
- wherein the sorting device, e.g. a sieve table, sorts (or screens) the fraction III (with particle size 1 - 2 mm) into,
   a first sub-fraction IIIa having a density sg₁, which is lower than the density of the target pellet material,
   a second sub-fraction IIIb having a density sg₂, which corresponds to the density of the target pellet material (or to the density of the already stored dry material of fraction II having a particle size 2 - 4 mm respectively),
   a third sub-fraction IIIc having a density sg₃, which is higher than the density of the target pellet material,
   wherein the first (too light) sub-fraction IIIa and the third (too heavy) sub-fraction IIIc are removed and the second sub-fraction IIIb (having the desired density sg₂) is added to the (already) stored second fraction II of the dry fine chips with particle size 2 - 4 mm;
- (com)pressing of the stored dry fine chips into pellets, for example by means of a pellet press, wherein after cooling-down the pellets are suitable for use as a high-grade fuel.

Hereinafter, the invention will be further discussed with reference to the description of the figure.

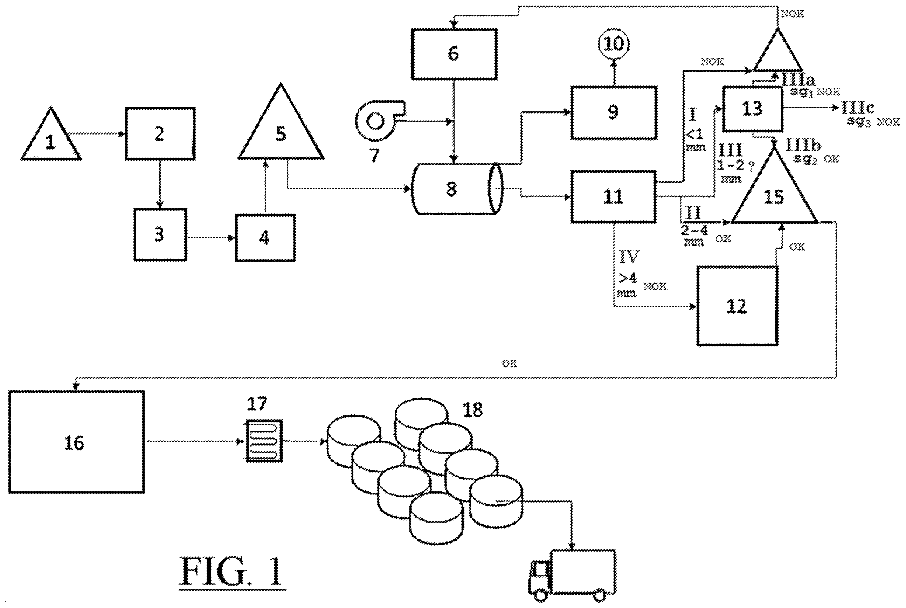

- Figure 1: shows a preferred embodiment of a device, which is adapted for carrying out the method according to the invention.

The system assembly shown in Figure 1 comprises a storage module 1 containing wet woody biomass, which forms the raw material for the system. In particular, the biomass comprises wood waste originating from the landscape maintenance etc. This raw material is supplied to a module 2, for example a shredder, which is arranged for basic reduction of large components (such as branches, etc. of trees and bushes) within the biomass supplied to the device, into coarse (wood)chips with a maximum size of for example 50 mm. Subsequently these coarse chips, after having been cleaned in a module 3, are fed to a module 4, e.g. a pellet shredder, a woodchipper, or a mill with an edge mill crushing/grinding mechanism, which are adapted for wet milling of the (wet) coarse chips into wet fine chips, which are fed to a storage module 5.

The wet fine chips are fed from the storage module 5 to a module 8, for example a tumble dryer 8, which is provided with hot drying air by a biomass-fired boiler 6 and a fan 7. The tumble dryer is adapted for drying of the wet fine chips, so that the wet fine chips are converted into dry fine chips.

The flue gases released in the biomass combustion boiler 6 are filtered in a number of plasma filters 9 in order to ensure that the flue gases discharged through the chimney 10 meet the applicable current environmental requirements.

The dry fine chips produced by the tumble dryer 8 are split into different fractions in a module 11, for example by a multiple shaking sieve, which is adapted for splitting (sorting) the dry fine chips. For example, said fractions include a waste-fraction I having a diameter of up to 1 mm, a second fraction II with a diameter of 2 - 4 mm, a third fraction III having a diameter of 1 - 2 mm and a fourth fraction IV having a cross-section greater than 4 mm.

The first fraction, i.e. the waste fraction I, cannot be used for processing into pellets, and therefore is fed to the biomass combustion boiler 6 in order to be burnt there as additional biomass fuel. The second fraction II is stored in a storage module 15. The third fraction III is fed to a sorting device 13 for further sorting into usable and unusable material, whereas the fourth fraction IV is fed to a particle size reduction device, for example a hammer mill 12, wherein firstly the (too) large particles are reduced in size, and secondly the size-reduced product is recycled to the storage module 15 (or to sorting module 11).

The sorting device 13 for fraction III, e.g. configured as a multiple sieve table, is arranged to sort (split) the fraction III into a first sub-fraction IIIa having a density sg₁, which is lower than the density of the target pellet material, a second sub-fraction IIIb having a density sg₂, which corresponds to the density of the target pellet material, and a third sub-fraction IIIc having a density sg₃, which is higher than the density of the target pellet material. The first sub-fraction IIIa and the third sub-fraction IIIc are considered unusable and therefore are removed, while the second sub-fraction IIIb is considered usable, and therefore is added to the already stored second fraction II of the dry fine chips. The first sub-fraction IIIa is fed to the biomass combustion boiler 6 for combustion, whereas the heavy sub-fraction IIIc, usually consisting of sand, small stones (silicon) etc. is discharged as a residue.

From the storage module 15, the dry fine chips are fed to a module 16, for example a pellet press (also known as pellet mill), which is adapted for compressing the dry fine chips into the actual form of the pellets, which, after cooling in a cooling module 17, are suitable for use as high-grade fuel having EN+ A1 or A2 quality. The pellets are stored in silos 18 and from there are transported to the customers.

As a result, a method and system is provided for converting wet woody biomass into high-quality pellets. The system comprises a module 2 for basic reduction of the ingredients of the biomass 1 into coarse chips, a module 4 for wet milling of the coarse chips into wet fine chips, a module 8 for drying of the wet fine chips into dry fine chips. A module 11 provides for sorting of the dry fine chips into various fractions I, II, III and IV having different cross sections. Particles < 1 mm (fraction I) are discharged/removed as not usable ("NOK, Not OK"), particles of 2 - 4 mm (fraction II) are allowed through as useful ("OK"), particles of 1 - 2 mm (fraction III) - in which a non-negligible percentage of sand etc. is included - are subjected to a further selection/sorting in a sorting module 13 based on their density, resulting in the subfractions IIIa ("NOK"), IIIb ("OK") and IIIc ("NOK"). Particles > 4 mm (fraction IV) are fed to a reduction module 12, where the size of the particles is reduced to < 4.5 mm. Subsequently this product is fed to the storage module 15 (or recycled to the sorting module 11). Finally, a pellet press 16 compresses the stored dry fine chips into pellets, which are suitable, after cooling, to be used as a high-grade fuel having a high EN+ quality.

With regard to the well-known methods from previous patent publications, like from DE 102013107983, DE10224850 and AT510925, the following is noted.

With the manufacturing of the pellets, it is of great importance to ensure, in accordance with EN+ certification from the European Pellet Council based on the European standard EN 14961-2, that the pellets are produced having a high calorific value and a low ash content, including the corresponding required melt-values for that ash (otherwise, there is a risk on the formation of slag in the boiler). According to the invention and as found in practice during extensive tests, wet milling is proposed for reducing the particle size of the chips. As a result, the size of the particles of the bark components are differently and better reduced, contrary and with respect to using a chopping device or a hammer, e.g. It has been found, that by crushing/grinding, preferably by means of a mill comprising an edge mill crushing/grinding mechanism (Kollergang), and not by chopping or hammering, it is achieved that the undesired ash content-increasing bark particles, formed due to the milling, remain below 1 mm, and as a result can be screened/sieved off much better and more effectively than by the application of hitherto known reduction techniques.

The method applied for splitting the dry fine chips into several fractions after drying is furthermore of importance among others, in addition to the method according to the invention, in which the wet crushing/grinding is performed. After the split, each fraction is treated in a different way, in such a way that those components are removed, which are responsible for or contribute to the formation of ash during the combustion of the finished product. For example, by screening and removing the fraction (III) containing particles having a diameter of 1 - 2 mm on the basis of their density, it is nevertheless achieved that the end product possesses an exceptionally high and constant quality (EN+), in spite of having a starting base material of a low and non-constant quality (such as wood waste from landscape maintenance, etc.).

In the documents mentioned, systems are known for pelletizing of landscape wood, however, in theses documents the purity and quality of the end-product is not mentioned. It is observed in this regard, that pelletizing landscape wood itself has never been a problem, but that the quality of the pellets always caused problems. The quality must be high in order to be able to present the product as a comfortable fuel for the customer. Therefore, the present invention seeks to provide a system (method/device) to produce certified pellets from low-grade raw material, which pellets are very high-quality and EN+ certified, and which can be burnt without problems with a low ash content and with preservation of the warranty of the boiler manufacturer.

Due to the large and ever-growing demand for EN+ quality pellets, the supply of raw material already shows shortages resulting in expensive raw materials and rising pellet prices. In spite of woody biomass being abundantly available in the form of landscape wood and forest chips, up to the present however, it was not used because is was not possible up till now to produce EN+ quality. This has resulted in not considering these materials anymore for the certification as raw material for EN+ pellets by the European Pellet Council. However, by applying the method according to the invention, landscape wood and forest chips may be included again as a potential raw material thereby creating much more possibilities for each country, instead of import, to solve nationally the increasing demand for the pellets. This solution according to the invention is more sustainable and less expensive, while trunk wood can be preserved, and be used better for more sophisticated applications.

## Claims

1. Method for conversion of wet woody biomass, including wood waste originating from landscape maintenance, into high-grade fuel pellets,
the method comprising the steps of:
- providing a quantity or a flow of woody biomass;
- basic reduction of the ingredients of the woody biomass into coarse chips with a maximum size of 50 mm for example;
- wet milling the coarse chips into wet fine chips;
- drying of the wet fine chips into dry fine chips;
- splitting of the dry fine chips into different fractions, including
a first fraction I having a cross section of 1 mm maximum,
a second fraction II having a cross section of 2 - 4 mm,
a third fraction III having a cross section of 1 - 2 mm and
a forth fraction IV having a cross section of greater than 4 mm;
- removal of the first fraction I, for example by combustion for the purpose of the above-mentioned drying of the wet fine chips,
storage of the second fraction II,
feeding of the third fraction III to a sorting device and
feeding of the forth fraction IV to a reduction device;
- wherein the sorting device sorts the third fraction III into,
a first sub-fraction IIIa having a density sg₁, which is lower than the density of the target pellet material,
a second sub-fraction IIIb having a density sg₂, which corresponds to the density of the target pellet material, and
a third sub-fraction IIIc having a density sg₃, which is higher than the density of the target pellet material,
wherein the first sub-fraction IIIa and the third sub-fraction IIIc are removed and the second sub-fraction IIIb is added to the stored second fraction II of the dry fine chips;
- compressing of the stored dry fine chips into pellets, cooling-down the pellets in order to be suitable for use as a high-grade fuel.

2. Method according to claim 1, wherein said wet milling of the coarse chips into wet fine chips is performed by means of a pellet shredder, a woodchipper, or a mill with an edge mill crushing/grinding mechanism.

3. Method according to claim 1 - 2, wherein said drying of the wet fine chips into dry fine chips is performed in a tumble dryer.

4. Method according to any one of the preceding claims, wherein said splitting of the dry fine chips into different fractions is performed by means of a shaking sieve.

5. Method according to any one of the preceding claims, wherein said reduction device is a hammer mill.

6. Method according to any one of the preceding claims, wherein said sorting device comprises one or more sieve tables.

7. Method according to any one of the preceding claims, wherein compressing of the stored dry fine chips into pellets is performed by means of a pellet press.

8. System for conversion of wet woody biomass, including wood waste originating from landscape maintenance, into high-grade fuel pellets,
the system comprises:
a module (2) adapted for basic reduction of the ingredients of the woody biomass (1) fed to the device into coarse chips with a maximum size of e.g. 50 mm;
a module (4), including a pellet shredder and a woodchipper, adapted for wet milling the coarse chips into wet fine chips;
a module (8), including a tumble dryer, adapted for drying of the wet fine chips into dry fine chips;
a module (11), including a shaking sieve, adapted for passing through chips having mutual different cross sections, said module is adapted for splitting of the dry fine chips into different fractions, including
a first fraction I having a cross section of 1 mm maximum,
a second fraction II having a cross section of 2 - 4 mm,
a third fraction III having a cross section of 1 - 2 mm and
a forth fraction IV having a cross section of greater than 4 mm;
storage means (15) for storage of the second fraction II,
a sorting device (13) into which the third fraction III is fed,
a reduction device (12), including a hammer mill, into which the forth fraction IV is fed;
wherein the sorting device (13), including a table sieve, is adapted for sorting the third fraction III into,
a first sub-fraction IIIa having a density sg₁, which is lower than the density of the target pellet material,
a second sub-fraction IIIb having a density sg₂, which corresponds to the density of the target pellet material, and
a third sub-fraction IIIc having a density sg₃, which is higher than the density of the target pellet material,
wherein the first sub-fraction IIIa and the third sub-fraction IIIc are removed and the second sub-fraction IIIb is added to the stored second fraction II of the dry fine chips (15);
a module (16), including a pellet press, adapted for compressing of the stored dry fine chips into pellets, which pellets are suitable, after cooling, to be used as a high-grade fuel.

## Patentansprüche

1. Verfahren zur Umwandlung nasser holziger Biomasse, die Holzabfälle umfasst, die aus der Landschaftspflege stammen, in hochwertige Brennstoffpellets,
wobei das Verfahren folgende Schritte umfasst:
- Bereitstellen einer Menge oder eines Stroms holziger Biomasse;
- grundlegende Zerkleinerung der Bestandteile der holzigen Biomasse in grobe Schnitzel mit einer maximalen Größe von beispielsweise 50 mm;
- Nassmahlen der groben Schnitzel zu nassen feinen Schnitzeln;
- Trocknen der nassen feinen Schnitzel zu trockenen feinen Schnitzeln;
- Aufteilen der trockenen feinen Schnitzel in unterschiedliche Fraktionen, umfassend:
eine erste Fraktion I mit einem Querschnitt von höchstens 1 mm,
eine zweite Fraktion II mit einem Querschnitt von 2 - 4 mm,
eine dritte Fraktion III mit einem Querschnitt von 1 - 2 mm und
eine vierte Fraktion IV mit einem Querschnitt von mehr als 4 mm;
- Entfernung der ersten Fraktion I, beispielsweise durch Verbrennung, zum Zweck des oben genannten Trocknens der nassen feinen Schnitzel,
Lagerung der zweiten Fraktion II,
Zuführen der dritten Fraktion III zu einer Sortiervorrichtung und
Zuführen der vierten Fraktion IV zu einer Zerkleinerungsvorrichtung;
- wobei die Sortiervorrichtung die dritte Fraktion III in Folgendes sortiert:
eine erste Unterfraktion IIIa mit einer Dichte sg₁, die niedriger ist als die Dichte des Ziel-Pelletmaterials,
eine zweite Unterfraktion IIIb mit einer Dichte sg₂, die der Dichte des Ziel-Pelletmaterials entspricht, und
eine dritte Unterfraktion IIIc mit einer Dichte sg₃, die höher ist als die Dichte des Ziel-Pelletmaterials,
wobei die erste Unterfraktion IIIa und die dritte Unterfraktion IIIc entfernt werden und die zweite Unterfraktion IIIb der gelagerten zweiten Fraktion II der trockenen feinen Schnitzel zugegeben wird;
- Zusammenpressen der gelagerten trockenen feinen Schnitzel zu Pellets, Abkühlen der Pellets, um zur Benutzung als hochwertiger Brennstoff geeignet zu sein.

2. Verfahren nach Anspruch 1, wobei das Nassmahlen der groben Schnitzel zu nassen feinen Schnitzeln mithilfe eines Pelletbrechers, eines Holzhäckslers oder einer Mühle mit einem Kollergang-Brech-/Mahlwerk vorgenommen wird.

3. Verfahren nach Anspruch 1 - 2, wobei das Trocknen der nassen feinen Schnitzel zu trockenen feinen Schnitzeln in einem Trommeltrockner vorgenommen wird.

4. Verfahren nach einem der vorhergehenden Ansprüche, wobei das Aufteilen der trockenen feinen Schnitzel in unterschiedliche Fraktionen mithilfe eines Rüttelsiebs vorgenommen wird.

5. Verfahren nach einem der vorhergehenden Ansprüche, wobei die Zerkleinerungsvorrichtung eine Hammermühle ist.

6. Verfahren nach einem der vorhergehenden Ansprüche, wobei die Sortiervorrichtung einen oder mehrere Siebtische umfasst.

7. Verfahren nach einem der vorhergehenden Ansprüche, wobei das Zusammenpressen der gelagerten trockenen feinen Schnitzel zu Pellets mithilfe einer Pelletpresse vorgenommen wird.

8. Anlage zur Umwandlung nasser holziger Biomasse, die Holzabfälle umfasst, die aus der Landschaftspflege stammen, in hochwertige Brennstoffpellets, wobei die Anlage umfasst:
ein Modul (2), das für eine grundlegende Zerkleinerung der Bestandteile der holzigen Biomasse (1), die in die Vorrichtung eingebracht werden, in grobe Schnitzel mit einer maximalen Größe von beispielsweise 50 mm ausgelegt ist;
ein Modul (4), das einen Pelletbrecher und einen Holzhäcksler umfasst, die zum Nassmahlen der groben Schnitzel zu nassen feinen Schnitzeln ausgelegt sind;
ein Modul (8), das einen Trommeltrockner umfasst, der zum Trocknen der nassen feinen Schnitzel zu trockenen feinen Schnitzeln ausgelegt ist;
ein Modul (11), das ein Rüttelsieb umfasst, das zum Passierenlassen von Schnitzeln mit untereinander verschiedenen Querschnitten ausgelegt ist, wobei das Modul zum Aufteilen der trockenen feinen Schnitzel in unterschiedliche Fraktionen ausgelegt ist, umfassend:
eine erste Fraktion I mit einem Querschnitt von höchstens 1 mm,
eine zweite Fraktion II mit einem Querschnitt von 2 - 4 mm,
eine dritte Fraktion III mit einem Querschnitt von 1 - 2 mm und
eine vierte Fraktion IV mit einem Querschnitt von mehr als 4 mm;
Lagermittel (15) zur Lagerung der zweiten Fraktion II,
eine Sortiervorrichtung (13), in welche die dritte Fraktion III eingebracht wird,
eine Zerkleinerungsvorrichtung (12), die eine Hammermühle umfasst, in welche die vierte Fraktion IV eingebracht wird;
wobei die Sortiervorrichtung (13), die ein Tischsieb umfasst, zum Sortieren der dritten Fraktion III in Folgendes ausgelegt ist:
eine erste Unterfraktion IIIa mit einer Dichte sg₁, die niedriger ist als die Dichte des Ziel-Pelletmaterials,
eine zweite Unterfraktion IIIb mit einer Dichte sg₂, die der Dichte des Ziel-Pelletmaterials entspricht, und
eine dritte Unterfraktion IIIc mit einer Dichte sg₃, die höher ist als die Dichte des Ziel-Pelletmaterials,
wobei die erste Unterfraktion IIIa und die dritte Unterfraktion IIIc entfernt werden und die zweite Unterfraktion IIIb der gelagerten zweiten Fraktion II der trockenen feinen Schnitzel (15) zugegeben wird;
ein Modul (16), das eine Pelletpresse umfasst, die zum Zusammenpressen der gelagerten trockenen feinen Schnitzel zu Pellets ausgelegt ist, wobei die Pellets nach dem Abkühlen dazu geeignet sind, als hochwertiger Brennstoff benutzt zu werden.

## Revendications

1. Procédé de conversion de biomasse ligneuse humide, comprenant des déchets de bois provenant de l'entretien paysager en granules de combustible de qualité supérieure, le procédé comprenant les étapes consistant à :
- fournir une quantité ou un flux de biomasse ligneuse ;
- réduire de manière basique les ingrédients de la biomasse ligneuse en copeaux grossiers avec une taille maximale de 50 mm par exemple ;
- broyer de manière humide des copeaux grossiers en copeaux fins humides ;
- sécher les copeaux fins humides en copeaux fins secs ;
- fractionner des copeaux fins secs en différentes fractions, comprenant
une première fraction I ayant une section transversale de 1 mm maximum,
une deuxième fraction II ayant une section transversale de 2 à 4 mm,
une troisième fraction III ayant une section transversale de 1 à 2 mm et
une quatrième fraction IV ayant une section transversale supérieure à 4 mm
- éliminer la première fraction I, par exemple par combustion en vue du séchage susmentionné des copeaux fins humides,
- stocker la deuxième fraction II,
- alimenter la troisième fraction III à un dispositif de triage et
- alimenter la quatrième fraction IV à un dispositif de réduction ;
dans lequel le dispositif de triage trie la troisième fraction III en,
une première sous-fraction IIIa ayant une densité sg₁, qui est inférieure à la densité de la matière granulée cible,
une seconde sous-fraction IIIb ayant une densité sg₂, qui correspond à la valeur de la densité de la matière granulée cible, et
une troisième sous-fraction IIIc ayant une densité sg₃, qui est supérieure à la densité de la matière granulée cible,
dans laquelle la première sous-fraction IIIa et la troisième sous-fraction IIIc sont enlevées et la deuxième sous-fraction IIIb est ajoutée à la deuxième fraction II stockée des copeaux fins secs ;
- compacter des copeaux fins secs stockés en granulés, refroidir des granulés afin d'être utilisable comme combustible de qualité supérieure.

2. Procédé selon la revendication 1, dans lequel ledit broyage humide des copeaux grossiers en des copeaux fins humides est réalisé à l'aide d'un déchiqueteur de granulés, d'une déchiqueteuse de bois ou d'un broyeur à meule avec un mécanisme de concassage/broyage.

3. Procédé selon la revendication 1 ou 2, dans lequel ledit séchage des copeaux fins humides en des copeaux fins secs se fait dans un séchoir à tambour.

4. Procédé selon l'une quelconque des revendications précédentes, dans lequel ledit fractionnement des copeaux fins secs en différentes fractions se fait à l'aide d'un tamis vibrant.

5. Procédé selon l'une quelconque des revendications précédentes, dans lequel ledit dispositif de réduction est un moulin à marteaux.

6. Procédé selon l'une quelconque des revendications précédentes, dans lequel ledit dispositif de triage comprend une ou plusieurs tables de tamisage.

7. Procédé selon l'une quelconque des revendications précédentes, dans lequel la compression des copeaux fins secs stockés en granulés se fait à l'aide d'une presse à granulés.

8. Système pour la conversion de biomasse ligneuse humide, comprenant des déchets de bois provenant de l'entretien paysager en granules de combustible de qualité supérieure, le système comprend :
un module (2) adapté pour la réduction de manière basique des ingrédients de la biomasse ligneuse (1) alimenté dans le dispositif en copeaux grossiers d'une taille maximale de 50 mm, par exemple ;
un module (4), comprenant un déchiqueteur de granulés et une déchiqueteuse de bois adapté pour le broyage humide des copeaux grossiers en copeaux fins humides ;
un module (8), comprenant un séchoir à tambour, adapté au séchage des copeaux fins humides en copeaux fins secs ;
un module (11), comprenant un tamis vibrant, adapté au passage des copeaux ayant des sections transversales différentes les unes par rapport aux autres, ledit module est adapté pour fractionner les copeaux fins secs en différentes fractions, comprenant
une première fraction I ayant une section de 1 mm maximum,
une deuxième fraction II ayant une section transversale de 2 à 4 mm,
une troisième fraction III ayant une section transversale de 1 à 2 mm et
une quatrième fraction IV ayant une section supérieure à 4 mm ;
des moyens de stockage (15) pour le stockage de la deuxième fraction II,
un dispositif de triage (13) dans lequel la troisième fraction III est alimentée,
un dispositif de réduction (12), comprenant un moulin à marteaux, dans lequel la quatrième fraction IV est alimentée ;
dans lequel le dispositif de triage (13), comprenant une table de tamisage, est adapté pour trier la troisième fraction III en,
une première sous-fraction IIIa ayant une densité sg₁, qui est inférieure à la densité de la matière granulée cible,
une seconde sous-fraction IIIb ayant une densité sg₂, qui correspond à la valeur de la densité de la matière granulée cible, et
une troisième sous-fraction IIIc ayant une densité sg₃, qui est supérieure à la valeur de densité de la matière granulé cible,
dans lequel la première sous-fraction IIIa et la troisième sous-fraction IIIc sont enlevées et la deuxième sous-fraction IIIb est ajoutée à la deuxième fraction II stockée des copeaux fins secs (15) ;
un module (16), comprenant une presse à granulés, adapté à la compression des copeaux fins secs stockés en granulés, lesquels sont appropriés, après refroidissement, pour être utilisés en tant que du carburant de qualité supérieure.
